# EUROPEAN PATENT APPLICATION

(11) **EP 4 671 338 A1**
(43) Date of publication of application: **31.12.2025**
(21) Application number: 24760146.1
(22) Date of filing: 08.02.2024
(51) Int. Cl.: C09J 167/00, C08L 67/00

(54) **PRODUCTION METHOD FOR POLYESTER RESIN AQUEOUS RE-DISPERSION FOR ADHESIVE AGENTS**

(30) Priority: 24.02.2023 JP 2023027718
(71) Applicant: Soken Chemical & Engineering Co., Ltd., Toshima-ku Tokyo 171-8531 (JP)
(72) Inventor: OKAMOTO Syuji, Tokyo 171-8531 (JP); SUTO Yasuo, Tokyo 171-8531 (JP); TANAKA Ryusuke, Tokyo 171-8531 (JP); IWAKI Masaru, Tokyo 171-8531 (JP)
(74) Representative: Dehns
(86) International application number: PCT/JP2024/004242
(87) International publication number: WO 2024/176844

(57) **Abstract**

One aspect of the present invention relates to a method for producing a redispersed aqueous polyester resin dispersion for an adhesive, and the production method includes a solid content increasing step of setting a solid content concentration of a polyester resin aqueous dispersion for an adhesive containing a polyester resin and water to 70 mass% or more, and a step of redispersing a high-solid-content product obtained by the solid content increasing step in an aqueous medium.

## Description

### Technical Field

One aspect of the present invention relates to a method for producing a redispersed aqueous polyester resin dispersion for an adhesive.

### Background Art

In general, an acrylic resin is often used as a resin used for an adhesive from the viewpoint of design flexibility and price.

Meanwhile, an acrylic monomer (such as butyl acrylate), which is a raw material for an acrylic resin, is mostly a petroleum-derived product, and thus a polyester resin-based adhesive using a biomass-derived monomer as a raw material has been recently proposed from the viewpoint of reducing environmental load (for example, Patent Literatures 1 and 2).

### Citation List

### Patent Literatures

Patent Literature 1: JP 2007-320976 A
Patent Literature 2: JP 2017-115149 A

### Summary of Invention

### Technical Problem

However, in Patent Literatures 1 and 2, the obtained polyester resin is diluted with an organic solvent such as xylene or ethyl acetate to adjust the viscosity so that the polyester resin can be easily applied as an adhesive composition, and there is a problem in environmental load due to the use of xylene or ethyl acetate, which is a petroleum-derived product. When an adhesive sheet is prepared by applying these adhesive compositions, the diluted organic solvent (for example, xylene or ethyl acetate) corresponds to a volatile organic compound (VOC), and thus equipment for preventing air pollution is required.

When a product is shipped in a state of containing the diluent solvent, the mass of the diluent solvent content increases, and thus the energy required for transportation increases, leading to an increase in carbon dioxide (CO₂) emission amount by such an increase in energy. Also at the time of storage of a product, the polyester resin is deteriorated due to the diluent solvent, and as a result, the storage stability of the product in the state of a dispersion may be deteriorated.

One aspect of the present invention provides a method for producing a redispersed aqueous polyester resin dispersion for an adhesive that can be stored and transported in a state where a solid content ratio is high, has excellent dispersion stability when being redispersed in an aqueous medium thereafter, and can form an adhesive layer excellent in film formability at the time of preparing the adhesive layer, water resistance of the adhesive layer, and adhesive force of the adhesive layer.

### Solution to Problem

The present inventors have conducted intensive studies in order to solve the above problems. As a result, according to the following aspect examples, the present inventors have found that the above problems can be solved, thereby completing the present invention.

The aspect examples of the present invention are as follows.
[1] A method for producing a redispersed aqueous polyester resin dispersion for an adhesive, including:
   a solid content increasing step (a solids concentration step) of setting a solid content concentration of a polyester resin aqueous dispersion for an adhesive containing a polyester resin and water to 70 mass% or more; and
   a step of redispersing a high-solid-content product obtained by the solid content increasing step in an aqueous medium.
[2] The method for producing a redispersed aqueous polyester resin dispersion for an adhesive according to [1], in which the polyester resin is a self-emulsifiable resin.
[3] The method for producing a redispersed aqueous polyester resin dispersion for an adhesive according to [1] or [2], in which the dispersion includes at least one dispersion selected from the group consisting of a dispersion in which a polyester resin having a sulfonic acid group is dispersed in an aqueous medium and a dispersion in which a polyester resin having a carboxyl group is dispersed in an aqueous medium by neutralizing the polyester resin with a basic compound.
[4] The method for producing a redispersed aqueous polyester resin dispersion for an adhesive according to any one of [1] to [3], in which the solid content concentration of the high-solid-content product is set to 80 mass% or more by the solid content increasing step.
[5] The method for producing a redispersed aqueous polyester resin dispersion for an adhesive according to any one of [1] to [4], in which the redispersed dispersion includes a crosslinking agent.

### Advantageous Effects of Invention

According to one aspect of the present invention, a biomass-derived raw material can be used by using a polyester resin, a petroleum-derived organic solvent is not used or the use amount thereof can be reduced by using an aqueous dispersion of the resin, and prevention of air pollution such as reduction of CO₂ emission amount can be expected. It is possible to store and transport the polyester resin aqueous dispersion while reducing the water content (increasing the solid content) of the polyester resin aqueous dispersion at the time of transportation of a product, and it is possible to reduce the problem of storage stability in a dispersion state and to reduce the CO₂ emission amount and the transportation cost.

As described above, according to one aspect of the present invention, it is possible to reduce the environmental load throughout the life cycle of the adhesive. The redispersed aqueous polyester resin dispersion obtained by one aspect of the present invention is excellent in dispersion stability in an aqueous medium after redispersion, and is excellent in film formability at the time of an adhesive layer, water resistance of an adhesive layer, and adhesive force.

### Description of Embodiments

### <<Method for producing redispersed aqueous polyester resin dispersion for adhesive>>

A method for producing a redispersed aqueous polyester resin dispersion for an adhesive according to one aspect of the present invention (hereinafter, also referred to as "the present production method") includes a solid content increasing step of setting a solid content concentration of a polyester resin aqueous dispersion for an adhesive containing a polyester resin and water to 70 mass% or more, and a step of redispersing a high-solid-content product obtained by the solid content increasing step in an aqueous medium (hereinafter, also referred to as "redispersing step").

### [Solid content increasing step]

The solid content increasing step in the present production method is a step of setting a solid content concentration of a polyester resin aqueous dispersion containing a polyester resin and water to 70 mass% or more. From the viewpoint of storage stability in a dispersion state and reduction in CO₂ emission amount and transportation cost during product transportation, the solid content concentration is preferably 80 mass% or more, more preferably 85 mass% or more, still more preferably 90 mass% or more, and particularly preferably 95 mass% or more.

In the present specification, the polyester resin aqueous dispersion for an adhesive before increasing a solid content may be referred to as "dispersion (A)", and the dispersion having a solid content concentration of 70 mass% or more and less than 100 mass% after increasing a solid content and a solid content having a solid content concentration of 100 mass% may be collectively referred to as "high-solid-content product (B)".

Note that, in the present specification, the solid content concentrations of the dispersion (A) and the high-solid-content product (B) can be measured by the method described in Examples described later.

As a method of increasing the solid content of the dispersion (A), that is, a method of setting the solid content concentration of the dispersion (A) to the lower limit value or more, it is preferable to dry the dispersion (A). A method of drying the dispersion (A) is not particularly limited as long as it is a known drying method, and examples thereof include spray drying, natural drying, heat drying, air blow drying, hot air drying, vacuum drying, freeze drying, and drying by pulse shock wave, and spray drying is industrially preferable.

In the solid content increasing step, the number of times of the drying operation is not limited, and the solid content concentration of the dispersion may be adjusted by the number of times of drying. When the drying operation is performed a plurality of times, one type of the drying method may be repeated, or two or more types thereof may be performed.

The form of the dispersion (A) at the time of drying may be appropriately selected according to a drying method to be selected, and for example, the dispersion (A) may be dried while being dispersed in a container, or may be dried after being applied onto a substrate.

A known spray dryer that sprays and dries a liquid or slurry can be used for the spray drying. Examples of the spraying type include a disc type and a nozzle type, and any type may be used. As a heat source, for example, hot air or heated steam is used.

The drying conditions are appropriately selected depending on, for example, the size and type of the spray dryer, the solid content concentration, viscosity, and amount of the dispersion (A), and the solid content concentration of the high-solid-content product (B). The drying temperature is preferably 80 to 150°C and more preferably 100 to 140°C. When the drying temperature is less than the lower limit value, sufficient drying may not be performed, and when the drying temperature exceeds the upper limit value, alteration of the polyester resin in the dispersion due to heat may occur. The drying time is not particularly limited, and can be appropriately adjusted depending on the drying temperature. Note that, when the solid content concentration does not reach a target value, the drying operation can be performed again under the same conditions or by changing the conditions.

Since the dispersion or solid after drying may be blocked by the resins being bound and aggregated to each other during storage, it is preferable to use an anti-binding agent during drying in order to improve storage stability and redispersibility.

The anti-binding agent is preferably an inorganic powder of fine particles, examples thereof include calcium carbonate, clay, silicic anhydride, aluminum silicate, white carbon, talc, and alumina white, and silicic anhydride, aluminum silicate, and calcium carbonate are more preferable.

The average particle size of the anti-binding agent is preferably in a range of 0.01 to 0.5 µm.

The use amount of the anti-binding agent is not particularly limited, and is preferably 2 to 20 mass% with respect to 100 mass% of the solid content of the dispersion (A).

When the anti-binding agent is used, the anti-binding agent may be added to the high-solid-content product (B) and uniformly mixed, or may be added to the dispersion (A) and dried in the presence of the anti-binding agent. From the viewpoint that the anti-binding agent is uniformly mixed and the anti-binding effect is easily obtained, it is preferable to add the anti-binding agent to the dispersion (A) and then perform drying. In the case of the spray drying, the dispersion (A) and the anti-binding agent may be simultaneously sprayed and dried.

### <Dispersion (A)>

The dispersion (A) used in the present production method is a polyester resin aqueous dispersion containing a polyester resin and water, and is used for adhesive use applications. The dispersion (A) may be used singly or in combination of two or more kinds thereof.

The dispersion (A) is obtained by dispersing a polyester resin in an aqueous medium. Examples of the aqueous medium include water and a mixture of water and an amphiphilic organic solvent. The amphiphilic organic solvent is hydrophilic and has an action of azeotroping itself with water, and preferably one having a boiling point of 150°C or lower selected from alcohol, ketone, cyclic ether, and a glycol derivative. From the viewpoint of easy volatilization with water at the time of increasing the solid content and at the time of drying in the case of using the redispersed dispersion as an adhesive, one having a boiling point of 110°C or lower is particularly preferable.

Examples of the amphiphilic organic solvent include alcohols such as methanol, ethanol, n-propanol, isopropanol (IPA), n-butanol, isobutanol, sec-butanol, and tert-butanol; ketones such as acetone, methyl ethyl ketone, and methyl isobutyl ketone; cyclic ethers such as tetrahydrofuran and dioxane; and glycol derivatives such as ethylene glycol monomethyl ether, ethylene glycol monoethyl ether, ethylene glycol monopropyl ether, propylene glycol monomethyl ether, propylene glycol monoethyl ether, propylene glycol monopropyl ether, and propylene glycol monobutyl ether.

When a mixture of water and an amphiphilic organic solvent is used as the aqueous medium, the mixing ratio of the water of the dispersion (A) and the amphiphilic organic solvent is preferably 1 : 1 to 10 : 1. When the mixing ratio is in the above range, the dispersion stability during dispersion of the resin tends to be excellent.

The solid content concentration of the dispersion (A) is preferably 10 mass% or more and less than 70 mass% and more preferably 10 to 60 mass% when the entire dispersion (A) is taken as 100 mass%. When the solid content concentration is in the above range, the dispersion stability during dispersion of the polyester resin tends to be excellent. The solid content concentration of the dispersion (A) can be adjusted by the method described in the method for producing the dispersion (A) described later.

The viscosity of the dispersion (A) at 25°C is preferably 20000 mPa·s or less and more preferably 10 to 5000 mPa·s. When the viscosity is in the above range, the film formability, water resistance, and adhesive force tend to be excellent when the redispersed dispersion is used as an adhesive. The viscosity can be measured, for example, by using a B-type viscometer.

The pH of the dispersion (A) at 25°C is preferably 3 to 11 and more preferably 4 to 10. When the pH is in the above range, the dispersion stability during dispersion of the polyester resin tends to be excellent. The pH can be measured, for example, by using a pH meter.

### (Polyester resin)

The polyester resin constituting the dispersion (A) can be produced by a known method such as polycondensation of a polycarboxylic acid and a polyhydric alcohol, depolymerization with a polycarboxylic acid after polycondensation, or addition of an acid anhydride after polycondensation. Specifically, the polyester resin can be produced by the methods described in, for example, JP 2010-090398 A and JP H06-256437.

At this time, various physical properties such as number average molecular weight (Mn) and the acid value of a polyester resin to be obtained can be controlled by adjusting the type and amount of the polycarboxylic acid component and/or the polyhydric alcohol component, and various reaction conditions.

The blending ratio of the polycarboxylic acid component and the polyhydric alcohol component is preferably 1 to 3.0 equivalents and particularly preferably 1 to 1.5 equivalents per equivalent of the polycarboxylic acid component. When the blending ratio of the polyhydric alcohol component is within the above range, the acid value is in an appropriate range, so that the molecular weight is easily increased, and the yield tends to be favorable.

The resin composition ratio of the polyester resin (the ratio of structural units derived from each component) can be determined, for example, by NMR.

The blending amount of the polycarboxylic acid component is preferably 5 mass% or more, more preferably 40 to 80 mass%, and still more preferably 50 to 70 mass% with respect to 100 mass% of the total of monomers used as raw materials of the polyester resin. The blending amount of the polyhydric alcohol component is preferably 10 mass% or more, more preferably 15 to 60 mass%, and still more preferably 20 to 50 mass% with respect to 100 mass% of the total of monomers used as raw materials of the polyester resin.

The polyester resin composed of these monomers can be produced, for example, by a first stage in which these monomers are directly subjected to an esterification reaction or subjected to a transesterification reaction, and a second stage in which the reaction product of the first stage is subjected to a polycondensation reaction. At this time, as a reaction catalyst, for example, an alkali metal, an alkaline earth metal, manganese, cobalt, zinc, antimony, germanium, or a titanium compound can be used.

Examples of the polycarboxylic acid component constituting the polyester resin include aromatic, aliphatic, and alicyclic dicarboxylic acids, trivalent or higher carboxylic acids, and ester derivatives and anhydrides thereof, and from the viewpoint of stably obtaining the polyester resin, a dicarboxylic acid is preferably used. The polycarboxylic acid component may be used singly or in combination of two or more kinds thereof.

As the polycarboxylic acid component, either a biomass-derived or petroleum-derived polycarboxylic acid may be used, but from the viewpoint of reducing the environmental load, a biomass-derived polycarboxylic acid component is preferable.

Examples of the aromatic dicarboxylic acid include terephthalic acid, isophthalic acid, orthophthalic acid, 2,5-dimethylterephthalic acid, 1,4-naphthalenedicarboxylic acid, 1,5-naphthalenedicarboxylic acid, 1,6-naphthalenedicarboxylic acid, 1,7-naphthalenedicarboxylic acid, 2,5-naphthalenedicarboxylic acid, 2,6-naphthalenedicarboxylic acid, 2,7-naphthalenedicarboxylic acid, 2,8-naphthalenedicarboxylic acid, biphenyldicarboxylic acid, 1,2-bisphenoxyethane-p,p'-dicarboxylic acid, and phenylindanedicarboxylic acid, and from the viewpoint of being excellent in handleability and cost, terephthalic acid and isophthalic acid are preferable.

The aromatic dicarboxylic acid may be used singly or in combination of two or more kinds thereof.

Examples of the aliphatic or alicyclic dicarboxylic acid include succinic acid, isodecyl succinic acid, dodecenyl succinic acid, maleic acid, fumaric acid, adipic acid, sebacic acid, oleic acid, erucic acid, azelaic acid, dodecanedionic acid, 1,3-cyclopentanedicarboxylic acid, 1,2-cyclohexanedicarboxylic acid, 1,4-cyclohexanedicarboxylic acid, and 2,5-furandicarboxylic acid, and from the viewpoint of being excellent in handleability and cost, succinic acid, adipic acid, azelaic acid, sebacic acid, oleic acid, erucic acid, and 2,5-furandicarboxylic acid are preferable.

The aliphatic or alicyclic dicarboxylic acid may be used singly or in combination of two or more kinds thereof.

Examples of the trivalent or higher carboxylic acid include trimellitic acid, pyromellitic acid, adamantanetricarboxylic acid, trimesic acid, 1,2,4-cyclohexylic acid tricarboxylic acid, 2,5,7-naphthalenetricarboxylic acid, 1,2,4-naphthalenetricarboxylic acid, 1,2,5-hexanetricarboxylic acid, and 1,2,7,8-octanetracarboxylic acid, and from the viewpoint of being excellent in handleability and cost, trimellitic acid and pyromellitic acid are preferable.

The trivalent or higher carboxylic acid may be used singly or in combination of two or more kinds thereof.

Examples of the polyhydric alcohol component constituting the polyester resin include ethylene glycol, diethylene glycol, polyethylene glycol, propylene glycol, polypropylene glycol, 1,3-propanediol, 1,3-butanediol, 1,4-butanediol, 1,5-pentanediol, 1,6-hexanediol, 1,7-heptanediol, 1,8-octanediol, 1,9-nonanediol, 1,10-decanediol, 2,4-dimethyl-2-ethylhexane-1,3-diol, neopentyl glycol, 2,2-dimethyl-1,3-propanediol, 2-ethyl-2-butyl-1,3-propanediol, 2-ethyl-2-isobutyl-1,3-propanediol, 3-methyl-1,5-pentanediol, 2,2,4-trimethyl-1,6-hexanediol, 1,2-cyclohexanedimethanol, 1,3-cyclohexanedimethanol, 1,4-cyclohexanedimethanol, 2,2,4,4-tetramethyl-1,3-cyclobutanediol, 4,4'-thiodiphenol, bisphenol A, 4,4'-methylenediphenol, 4,4'-(2-norbornylidene)diphenol, 4,4'-dihydroxybiphenol, o-dihydroxybenzene, m-dihydroxybenzene, p-dihydroxybenzene, 4,4'-isopropylidenephenol, 4,4'-isopropylidenediol, cyclopentane-1,2-diol, cyclohexane-1,2-diol, cyclohexane-1,4-diol, glycerin, isosorbide, isomannide, erythritane, sorbitol, and erythritol, and from the viewpoint of being excellent in handleability and cost, ethylene glycol, diethylene glycol, 1,4-butanediol, 1,6-hexanediol, neopentyl glycol, 2,2-dimethyl-1,3-propanediol, isosorbide, and erythritane are preferable.

The polyhydric alcohol component may be used singly or in combination of two or more kinds thereof.

As the polyhydric alcohol component, either a biomass-derived or petroleum-derived polyhydric alcohol may be used, but from the viewpoint of reducing the environmental load, a biomass-derived polyhydric alcohol component is preferable.

The polyester resin contained in the dispersion (A) preferably has, for example, a carboxylic acid group (carboxyl group), a carboxylate, a sulfonic acid group, a sulfonate, a phosphonic acid group, or a phosphonate in order to facilitate dispersion of the polyester resin in an aqueous medium.

Examples of the monomer used as a raw material of the polyester resin having a carboxyl group and/or a carboxylate include the dicarboxylic acids and trivalent or higher carboxylic acids exemplified as the polycarboxylic acid component, or polycarboxylic acids such as alkali metal salts, alkaline earth metal salts, and ammonium salts thereof.

Examples of the monomer used as a raw material of the polyester resin having a sulfonic acid group and/or a sulfonate include carboxylic acids having a sulfonic acid group such as 5-sulfoisophthalic acid, sodium 5-sulfoisophthalic acid, 4-sulfophthalic acid, 4-sulfonaphthalene-2,7 dicarboxylic acid, 5-(4-sulfophenoxy)isophthalic acid, 5-(sulfopropoxy)isophthalic acid, sulfopropylmalonic acid, sulfosuccinic acid, 2-sulfobenzoic acid, 3-sulfobenzoic acid, and 5-sulfosalicylic acid; methyl esters of these carboxylic acids; polycarboxylic acids having a sulfonic acid group and/or a sulfonate such as sulfonates (alkali metal salt, alkaline earth metal salt, ammonium salt) of these carboxylic acids having a sulfonic acid group or methyl esters of carboxylic acids.

When the polycarboxylic acid having a sulfonic acid group and/or a sulfonate is used as a raw material of the polyester resin, the use amount thereof is preferably 0.1 to 10 mass% and more preferably 2 to 6 mass% with respect to 100 mass% of the total of monomers used as a raw material of the polyester resin.

As the polyester resin, for example, a modified polyester copolymer such as a block copolymer or graft copolymer modified with, for example, acrylic, urethane, or epoxy can also be used.

The number average molecular weight (Mn) of the polyester resin in terms of standard polystyrene molecular weight as measured by a gel permeation chromatography (GPC) method is preferably 1000 to 100000, more preferably 2000 to 80000, and still more preferably 4000 to 50000. When Mn is within the above range, the dispersibility of the polyester resin in an aqueous medium is excellent.

The weight average molecular weight (Mw) of the polyester resin in terms of standard polystyrene molecular weight as measured by a gel permeation chromatography (GPC) method is preferably 8000 to 200000, more preferably 10000 to 180000, and still more preferably 20000 to 150000. When Mw is within the above range, the dispersibility of the polyester resin in an aqueous medium is excellent.

From the viewpoint of adhesive property of the adhesive layer, the glass transition temperature (Tg) of the polyester resin as measured in accordance with JIS K 7121 is preferably -100 to 40°C, more preferably -80 to 20°C, and still more preferably -70 to 5°C. When Tg is within the above range, the polyester resin is excellent in stability and dispersibility in an aqueous medium.

The acid value of the polyester resin is preferably 200 mgKOH/g or less, more preferably 160 mgKOH/g or less, still more preferably 100 mgKOH/g or less, particularly preferably 10 mgKOH/g or less, and especially preferably 3 mgKOH/g or less. When the acid value is within the above range, hydrolysis hardly proceeds, moist-heat durability, adhesive force, and hygrothermal whitening resistance tend to be favorable, and even when a layer of, for example, a metal is bonded to one surface of the adhesive layer, the metal tends not to corrode.

The hydroxyl value of the polyester resin is preferably 1 to 50 mgKOH/g, more preferably 2 to 30 mgKOH/, still more preferably 3 to 20 mgKOH/g, and particularly preferably 4 to 15 mgKOH/g. When the hydroxyl value is within the above range, the crosslinking efficiency with the crosslinking agent described later tends to be favorable.

The polyester resin is preferably a self-emulsifiable resin. The polyester resin is an essentially water-insoluble resin that is not dissolved in an aqueous medium (for example, water) by itself, but since the polyester resin is self-emulsifiable, the polyester resin can be stably dispersed in an aqueous medium with a high content and in a state of a fine particle size without using, for example, an emulsifier or a surfactant. An adhesive layer which uses a dispersion not using, for example, an emulsifier or a surfactant tends to be excellent in water resistance.

Note that the term "self-emulsifiable" means that some hydrophilic group is chemically introduced into the resin skeleton, an emulsifier or a surfactant is not required to be added, and the resin itself has emulsifying ability.

The polyester resin may be used singly or in combination of two or more kinds thereof.

It is preferable that the content of the polyester resin is preferably 10 mass% or more and less than 70 mass% in 100 mass% of the dispersion (A).

### (Method for producing dispersion (A))

The dispersion (A) can be obtained by dispersing the polyester resin in an aqueous medium, and specifically, can be produced by the methods described in JP 2010-090398 A such as (i) a method of directly charging an aqueous medium into a polymerization pot after completion of polymerization of a polyester resin, and performing stirring and dispersing; (ii) a method of placing an aqueous medium in a dispersion pot separate from the polymerization pot, charging a polyester resin in a molten state into the dispersion pot after completion of polymerization of a polyester resin, and performing stirring and dispersing; and (iii) a method charging a polyester resin in a molten state into a kneader after completion of polymerization of a polyester resin, charging an aqueous medium into the kneader, and performing kneading and dispersing.

In these production methods, an aqueous dispersion of the polyester resin can be obtained by dissolving the polyester resin in an amphiphilic organic solvent, or dispersing or dissolving the polyester resin in water and an amphiphilic organic solvent, then charging water as necessary to cause phase transition, and then distilling off a part or all of the amphiphilic organic solvent as necessary. The method of distilling off the amphiphilic organic solvent is not particularly limited, but for example, a method of distilling under normal pressure or reduced pressure is preferable.

A completely aqueous dispersion can be prepared by distilling off the entire amphiphilic organic solvent, but in consideration of the stability of the dispersion, it is also preferable to leave 0.005 to 30 mass% of the amphiphilic organic solvent when the entire dispersion (A) is taken as 100 mass%. The content ratio of the amphiphilic organic solvent can be quantified by gas chromatography (GC).

The solid content concentration of the dispersion (A) can be adjusted by the amount of the aqueous medium to be charged and, as necessary, by distilling off the amphiphilic organic solvent. After the polyester resin is dispersed, an aqueous medium may be additionally charged for adjustment.

When the polyester resin is dispersed in an aqueous medium, in one aspect, it is preferable to disperse the polyester resin by neutralizing the carboxyl group of the polyester resin with a basic compound. Since carboxyl anions are generated and the polyester resin fine particles are stably dispersed without being aggregated by the electric repulsive force between the anions, a dispersion having excellent dispersion stability can be obtained without using, for example, a surfactant.

However, when the polyester resin alone can easily produce an anion in an aqueous medium (for example, in the case of a polyester resin having a sulfonic acid group and/or a sulfonate), the basic compound may not be added.

Examples of the basic compound include ammonia; organic amines; and inorganic bases such as sodium hydroxide and potassium hydroxide, and ammonia and organic amines are preferable. This is because the basic compound causes a neutralization reaction with a carboxyl group in the polyester resin to promote the water-based conversion of the polyester resin, but when the basic compound remains during film formation, the performance thereof tends to be deteriorated, and thus as basic compound, a compound that volatilizes with an aqueous medium at the time of increasing the solid content or drying during use is preferable.

The boiling point of the organic amines is preferably 160°C or lower, and particularly preferably azeotropicable with water.

Specific examples of the organic amines include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, and triethanolamine, and it is preferable to use a tertiary amine such as triethylamine, tributylamine, dimethylethanolamine, or diethylenetriamine.

The basic compound may be used singly or in combination of two or more kinds thereof.

The basic compound is used according to the amount of the carboxyl group contained in the polyester resin, the amount of the basic compound may be at least an amount capable of partially neutralizing the carboxyl group, and the amount of the basic compound is preferably 0.6 to 15 equivalents and more preferably 0.8 to 6 equivalents with respect of the carboxyl group. The amount thereof is usually about 1 to 10 parts by mass with respect to 100 parts by mass of the polyester resin.

When the use amount of the basic compound is less than the above range, the effect of addition of the basic compound may not be recognized, and when the use amount thereof exceeds the above range, the storage stability of the polyester resin aqueous dispersion may be deteriorated.

The dispersion (A) preferably includes at least one dispersion selected from the group consisting of a dispersion in which a polyester resin having a sulfonic acid group is dispersed in an aqueous medium and a dispersion in which a polyester resin having a carboxyl group is dispersed in an aqueous medium by neutralizing the polyester resin with a basic compound among dispersions obtained by dispersing the polyester resin in an aqueous medium.

As the dispersion (A), a commercially available product may be used, and specific examples of the commercially available product of the dispersion (A) include "VYLONAL MD-1335", "VYLONAL MD-1480", "VYLONAL MD-1985", and "VYLONAL MD-2000" manufactured by TOYOBO Co., Ltd., and "Elitel KT0507" and "Elitel KT-8904" manufactured by UNITIKA LTD.

The dispersion (A) can be used for adhesive use applications preferably by adding, for example, a crosslinking agent, and is excellent in film formability at the time of preparing an adhesive layer, water resistance, and adhesive force.

### <High-solid-content product (B)>

The high-solid-content product (B) used in the present production method is obtained by increasing the solid content of the dispersion (A). Since the dispersion (A) is a polyester resin aqueous dispersion containing a polyester resin and water and the polyester resin component usually does not change before and after increasing the solid content, the high-solid-content product (B) is a polyester resin aqueous dispersion containing a polyester resin and water and having a solid content concentration of 70 mass% or more and less than 100 mass%, or a solid content containing a polyester resin and having a solid content concentration of 100 mass%.

From the viewpoint of storage stability in a dispersion state and reduction in CO₂ emission amount and transportation cost during product transportation, the solid content concentration of the high-solid-content product (B) is 70 mass% or more, preferably 80 mass% or more, more preferably 85 mass% or more, still more preferably 90 mass% or more, and particularly preferably 95 mass% or more.

The form of the high-solid-content product (B) varies depending on the solid content concentration and the method of increasing the solid content of the dispersion (A), and examples thereof include emulsions, powders, particles, films, and slurries, and any form may be used.

### [Redispersing step]

The redispersing step in the present production method is a step of redispersing the high-solid-content product (B) in an aqueous medium. In the present specification, the redispersed aqueous polyester resin dispersion for an adhesive (the polyester resin aqueous dispersion for an adhesive after redispersion) may be referred to as "redispersed dispersion (C)".

Examples of the aqueous medium used at the time of the redispersing step include those similar to the aqueous medium of the dispersion (A), and the aqueous medium may be appropriately selected depending on the use applications of the redispersed dispersion (C), but is preferably the same kind as the aqueous medium of the dispersion (A). When the aqueous medium of the dispersion (A) is a mixture of water and an amphiphilic organic solvent, the mixing ratio is preferably the same.

The method of redispersing the high-solid-content product (B) is not particularly limited as long as it can infiltrate the high-solid-content product (B) into the aqueous medium, but it is preferable to include the following steps from the viewpoint of producing a stable redispersed dispersion. The following Steps 1 and 3 can be selected to be performed or not performed in consideration of, for example, the emulsifiability of the high-solid-content product (B) and the stability of the redispersed dispersion (C), and it is also preferable that the steps are not performed.
(Step 1): a step of dissolving the high-solid-content product (B) in an amphiphilic organic solvent to form a solution
(Step 2): a step of mixing and emulsifying the high-solid-content product (B) or the solution obtained in Step 1 with water
(Step 3): a step of distilling off an organic solvent from the emulsion obtained in Step 2

### (Step 1)

Step 1 is a step of dissolving the high-solid-content product (B) in an amphiphilic organic solvent to obtain a solution. Examples of the amphiphilic organic solvent include those similar to the amphiphilic organic solvent described above, and the amphiphilic organic solvent may be used singly or as a mixture.

The method of dissolving the high-solid-content product (B) in the amphiphilic organic solvent is not particularly limited, and a known method such as heating or stirring may be used as appropriate.

However, Step 1 may be performed when a resin or the high-solid-content product (B) that is difficult to perform phase inversion emulsification with water alone is used, and may not be performed when phase inversion emulsification can be performed with water alone.

The temperature condition in Step 1 is not particularly limited, but it is preferably performed in a temperature range from 40°C to the boiling point of the amphiphilic organic solvent, and more preferably 50 to 150°C. When the working temperature is lower than 40°C, it is difficult to keep the resin in a dissolved state, and the viscosity of the solution may be significantly increased. When the working temperature exceeds the boiling point of the amphiphilic organic solvent, scattering of the amphiphilic organic solvent becomes remarkable, and it may be difficult to prepare a solution.

### (Step 2)

Step 2 is a step of performing phase inversion emulsification by mixing the high-solid-content product (B) or the solution obtained in Step 1, water, and if necessary, the basic compound. At this time, the order of mixing is not particularly limited, and for example, when Step 1 is performed, the solution obtained in Step 1 is stirred, and a mixed solution of water and, if necessary, the basic compound may be added thereto little by little, or water may be added thereto after the basic compound is added.

When Steps 1 and 2 are performed throughout, Steps 1 and 2 are performed preferably in a temperature range from 40°C to the boiling point of the amphiphilic organic solvent, more preferably 50 to 150°C, through Steps 1 and 2. When the working temperature is lower than 40°C, it is difficult to keep the resin in a dissolved state, and the viscosity of the solution may be significantly increased. When the working temperature exceeds the boiling point of the amphiphilic organic solvent, scattering of the amphiphilic organic solvent becomes remarkable, and it may be difficult to prepare a redispersed dispersion.

When only Step 2 is performed, a mixed solution of water and, if necessary, the basic compound may be added little by little, or water may be added after the basic compound is added. In this case, the temperature condition at the time of emulsification is not particularly limited, but it is usually preferably performed at 0 to 100°C, and more preferably performed at 10 to 40°C. When the working temperature exceeds 100°C, scattering of water becomes remarkable, and it may be difficult to prepare a redispersed dispersion.

### (Step 3)

Step 3 is a step of distilling off the amphiphilic organic solvent. The amphiphilic organic solvent can be distilled off to the outside of the system by being azeotroped together with water. The degree of distillation may be appropriately determined from the viewpoint of desired performance and stability, but it can be distilled to 0.5 mass% or less of the entire redispersed dispersion (C). The content ratio of the amphiphilic organic solvent can be quantified by gas chromatography (GC).

However, Step 3 may not be performed when Step 1 is not performed or when there is no problem in the storage stability of the aqueous dispersion even in a system containing an amphiphilic organic solvent after phase inversion.

The temperature condition in Step 3 is not particularly limited, but it is preferable to set a temperature equal to or higher than the temperature at which the amphiphilic organic solvent and water are azeotroped. When the distillation of the amphiphilic organic solvent proceeds, the temperature in the system finally reaches the boiling point of water. At this time, when it is not preferable that the temperature is set to be equal to or higher than the temperature at which the amphiphilic organic solvent and water are azeotroped for the polyester resin contained in the high-solid-content product (B), it may be performed under reduced pressure. After completion of Step 3, it is preferable to rapidly cool to 40°C or lower.

It is preferable that after emulsification is performed in Step 2, Step 3 is immediately performed to distill off the amphiphilic organic solvent. This is because, for example, the aqueous redispersed dispersion may not be stable in a system containing an amphiphilic organic solvent after phase inversion, and the aqueous redispersed dispersion can be produced with stable quality in a relatively simple process without using special equipment. When Steps 1 and 2 are performed under the temperature condition, it is possible to shorten the time required for the step in immediately performing Step 3 following Step 2, which is preferable from the viewpoint of energy saving.

A device used in each step is not particularly limited, and a known device may be used. The device may be a device including a tank into which a liquid can be charged, capable of appropriately stirring a mixture of the aqueous medium and the high-solid-content product (B) charged into the tank and, as necessary, provided with a condenser capable of agglomerating the accumulated vapor, and a device capable of cooling and heating the inside of the tank to the temperature described in Steps 1 to 3 is preferable.

In the redispersing step, for example, filtration may be performed as necessary for the purpose of preventing mixing of coarse particles. For example, a stainless steel filter having a mesh size of about 300 to 600 may be used. Pressure filtration may be performed at an air pressure of about 0.2 MPa.

Note that, for the purpose of suppressing generation of repellency and bubbles during coating, an organic solvent may be added as long as the effects of the present invention are not impaired. After a dispersion medium is distilled off to a desired solid content concentration or more, the solid content concentration may be adjusted by diluting with an aqueous medium.

When the high-solid-content product (B) is redispersed in the aqueous medium, the carboxyl group of the polyester resin contained in the high-solid-content product (B) may be neutralized with a basic compound and dispersed in order to facilitate dispersion. Examples of the basic compound include those similar to the basic compound used for neutralizing the carboxyl group of the polyester resin described above, and the same applies to the use amount thereof.

### <Redispersed dispersion (C)>

The redispersed dispersion (C) obtained by the present production method is excellent in redispersibility in an aqueous medium, and is excellent in film formability, water resistance, and adhesiveness of an adhesive layer to be obtained even after undergoing the solid content increasing step and the redispersing step, and thus is used for adhesive use applications.

The solid content concentration of the redispersed dispersion (C) may be appropriately adjusted depending on the use applications of the redispersed dispersion (C), but is preferably about the same as the solid content concentration of the used dispersion (A). The solid content concentration of the redispersed dispersion (C) is preferably 10 mass% or more and less than 70 mass% and more preferably 10 to 60 mass% in 100 mass% of the redispersed dispersion (C). When the solid content concentration is in the above range, the dispersion stability of the redispersed dispersion (C) tends to be excellent.

The viscosity of the redispersed dispersion (C) at 25°C may be appropriately adjusted depending on the use applications of the redispersed dispersion (C), but is preferably about the same as the viscosity of the used dispersion (A) at 25°C. The viscosity of the redispersed dispersion (C) at 25°C is preferably 20000 mPa·s or less and more preferably 10 to 5000 mPa·s. When the viscosity is in the above range, the film formability, water resistance, and adhesive force tend to be excellent when the redispersed dispersion is used as an adhesive.

The pH of the redispersed dispersion (C) is preferably about the same as the pH of the used dispersion (A). That is, the pH is preferably 3 to 11 and more preferably 4 to 10. When the pH is in the above range, the dispersion stability of the redispersed dispersion (C) tends to be excellent.

As described above, the redispersed dispersion (C) is an aqueous dispersion of a polyester resin used for adhesive use applications, and is excellent in film formability at the time of preparing an adhesive layer, water resistance, and adhesive force. The redispersed dispersion (C) preferably contains a crosslinking agent.

### (Crosslinking agent)

The crosslinking agent is not particularly limited as long as it can crosslink the polyester resin contained in the redispersed dispersion (C). Examples of the crosslinking agent include an isocyanate compound, an epoxy compound, and a metal chelate compound.

The crosslinking agent may be used singly or two or more kinds thereof may be used.

When the redispersed dispersion (C) contains a crosslinking agent, the polyester resin is crosslinked to form a crosslinked body (network polymer), so that an adhesive layer excellent in adhesive force and heat resistance can be easily formed.

As the isocyanate compound, an isocyanate compound having the number of isocyanate groups of two or more in one molecule is usually used, and the number of isocyanate groups in one molecule is preferably two to eight and more preferably three to six. The number of isocyanate groups in the above range is preferable from the viewpoint of the efficiency of the crosslinking reaction between the polyester resin and the isocyanate compound and the viewpoint of maintaining the flexibility of an adhesive layer to be obtained.

Examples of the diisocyanate compound having two isocyanate groups in one molecule include: an aliphatic diisocyanate, an alicyclic diisocyanate, and an aromatic diisocyanate.

Examples of the aliphatic diisocyanates include aliphatic diisocyanates having 4 to 30 carbon atoms such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate.

Examples of the alicyclic diisocyanates include alicyclic diisocyanates having 7 to 30 carbon atoms such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylene diisocyanate.

Examples of the aromatic diisocyanates include aromatic diisocyanates having 8 to 30 carbon atoms such as phenylene diisocyanate, tolylene diisocyanate, xylylene diisocyanate, naphthalene diisocyanate, diphenyl ether diisocyanate, diphenylmethane diisocyanate, and diphenylpropane diisocyanate.

Examples of the isocyanate compound having three or more isocyanate groups in one molecule include: an aromatic polyisocyanate, an aliphatic polyisocyanate, and an alicyclic polyisocyanate. Specific examples thereof include 2,4,6-triisocyanate toluene, 1,3,5-triisocyanate benzene, and 4,4',4"-triphenylmethane triisocyanate.

Examples of the isocyanate compound further include: a multimer (for example, a dimer or trimer, a biuret, or an isocyanurate), a derivative (for example, an addition reaction product of a polyhydric alcohol and two or more molecules of a diisocyanate compound), and a polymer of the isocyanate compound having two or three or more isocyanate groups.

Examples of the polyhydric alcohol in the derivative include trihydric or higher low-molecular-weight polyhydric alcohols such as trimethylolpropane, glycerin, and pentaerythritol; and high-molecular-weight polyhydric alcohols such as polyether polyol, polyester polyol, acryl polyol, polybutadiene polyol, and polyisoprene polyol.

Specific examples of such an isocyanate compound include a trimer of diphenylmethane diisocyanate, a biuret or isocyanurate of polymethylene polyphenyl polyisocyanate, hexamethylene diisocyanate, or tolylene diisocyanate, a reaction product of trimethylolpropane and tolylene diisocyanate or xylylene diisocyanate (for example, a trimolecular adduct of tolylene diisocyanate or xylylene diisocyanate), a reaction product of trimethylolpropane and hexamethylene diisocyanate (for example, a trimolecular adduct of hexamethylene diisocyanate), polyether polyisocyanate, and polyester polyisocyanate.

Among the isocyanate compounds, from the viewpoint of hardly yellowing, xylylene diisocyanate-based and hexamethylene diisocyanate-based crosslinking agents are preferable, and from the viewpoint of stress relaxation, a tolylene diisocyanate-based crosslinking agent is preferable. Examples of the xylylene diisocyanate-based crosslinking agent include xylylene diisocyanate and a multimer, a derivative, or a polymer thereof, examples of the hexamethylene diisocyanate-based crosslinking agent include hexamethylene diisocyanate and a multimer, a derivative, or a polymer thereof, and examples of the tolylene diisocyanate-based crosslinking agent include tolylene diisocyanate and a multimer, a derivative, or a polymer thereof.

Examples of the epoxy compound include compounds having two or more epoxy groups in the molecule, and examples thereof include ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidyl aniline, diaminglycidylamine, N,N,N',N'-tetraglycidyl-m-xylylenediamine, N,N,N',N'-tetraglycidylaminophenylmethane, 1,3-bis(N,N'-diamineglycidylaminomethyl), 1,3-bis(N,N-diglycidylaminomethyl)cyclohexane, triglycidyl isocyanurate, m-N,N-diglycidylaminophenylglycidyl ether, N,N-diglycidyl toluidine, and pentaerythritol polyglycidyl ether.

Examples of the metal chelate compound include compounds in which, for example, alkoxide, acetylacetone, or ethyl acetoacetate is coordinated to a polyvalent metal such as aluminum, iron, copper, zinc, tin, titanium, nickel, antimony, magnesium, vanadium, chromium, or zirconium. Specific examples thereof include aluminum isopropylate, aluminum secondary butyrate, aluminum ethylacetoacetate diisopropylate, aluminum tris(ethyl acetoacetate), and aluminum tris(acetylacetonate).

When the redispersed dispersion (C) contains a crosslinking agent, the timing of addition of the crosslinking agent is preferably at the time of the redispersing step (for example, Step 2) or after the redispersing step. From the viewpoint that an adhesive layer having more excellent adhesive force can be easily formed, the content of the crosslinking agent is preferably 0.01 to 30 parts by mass and more preferably 0.05 to 25 parts by mass with respect to 100 parts by mass of the solid content of the high-solid-content product (B).

### (Other components)

The redispersed dispersion (C) may contain other components as necessary as long as the effects of the present invention are not impaired. Examples of the other components include a plasticizer, a thickener, a water-resistant agent, a pigment, a dispersant, an antifoaming agent, an oil agent, a viscosity modifier, a tackifier, a humectant, a fiber softener, a smoothing agent, an antistatic agent, and a pH adjuster. When the redispersed dispersion (C) contains other components, the timing of addition of the other components is preferably at the time of the redispersing step (for example, Step 2) or after the redispersing step.

### · Plasticizer

Examples of the plasticizer include alkyl esters of aromatic polycarboxylic acids and alkyl esters of aliphatic polycarboxylic acids, and alkyl esters of aromatic polycarboxylic acids are preferable.

The plasticizers can be used can be used singly or in combination of two or more kinds thereof.

The content of the plasticizer is preferably 2 to 40 parts by mass and more preferably 3 to 30 parts by mass with respect to 100 parts by mass of the high-solid-content product (B). When the content of the plasticizer is too large, the adhesive force tends to decrease due to bleed-out of the plasticizer, and when the content is too small, the adhesive force tends to decrease due to decrease in fit(affinity and wettability).

### · Thickener

Examples of the thickener include inorganic thickeners such as silicates, metal silicates, montmorillonite, and colloidal alumina; polyacrylic acid-based thickeners such as a copolymer of (meth)acrylic acid and (meth)acrylic acid ester and sodium polyacrylate; associative thickeners having a hydrophilic part and a hydrophobic part in one molecule and showing a thickening effect effectively since in an aqueous medium, the hydrophobic part is adsorbed on a surface of a pigment or emulsion particles in a coating composition or the hydrophobic parts are associated with each other; fibrous derivative-based thickeners such as carboxymethyl cellulose, methyl cellulose, and hydroxyethyl cellulose; protein-based thickeners such as casein, sodium caseinate, and ammonium caseinate; alginate-based thickeners such as sodium alginate; polyvinyl-based thickeners such as polyvinyl alcohol, polyvinyl pyrrolidone, and a polyvinyl benzyl ether copolymer; polyether-based thickeners such as pluronic (registered trademark) polyether, polyether dialkyl ester, polyether dialkyl ether, and a polyether epoxy modified product; maleic anhydride copolymer-based thickeners such as partial esters of a vinyl methyl ether-maleic anhydride copolymer; and polyamide-based thickeners such as polyamideamine salts.

The thickener can be used can be used singly or in combination of two or more kinds thereof.

The content of the thickener is preferably 0.1 to 10 parts by mass and more preferably 0.5 to 5 parts by mass with respect to 100 parts by mass of the high-solid-content product (B).

### (Method for forming adhesive layer)

The adhesive layer containing the redispersed dispersion (C) can be formed by a known method, and for example, the adhesive layer can be formed on a support by applying the redispersed dispersion (C) to the support and subjecting the applied redispersed dispersion (C) to crosslinking reaction. After the redispersed dispersion (C) is applied to the support, as necessary, a support may be further disposed on the applied surface and the redispersed dispersion (C) may be subjected to crosslinking reaction.

Note that, after the redispersed dispersion (C) is applied to an adherend, a support may be disposed on the applied surface to form an adhesive layer.

Examples of the support include a base material subjected to a peeling treatment.

The base material is not particularly limited, and examples thereof include a resin plate, a glass plate, a woven fabric, a nonwoven fabric, and paper.

The resin of the resin plate is preferably a transparent resin, and examples of the transparent resin include polycarbonate (PC), polymethyl methacrylate (PMMA), polyethylene terephthalate (PET), polyethylene (PE), polypropylene (PP), an acrylonitrile-butadiene-styrene copolymer (ABS), polyamide (nylon), polyvinyl chloride, and polyurethane. The polyethylene terephthalate (PET) includes not only crystalline normal PET but also amorphous PET called A-PET and PETG.

Examples of the method of applying the redispersed dispersion (C) include methods for applying the redispersed dispersion (C) to obtain an adhesive layer by a known method, for example, a spin coating method, a knife coating method, a roll coating method, a bar coating method, a blade coating method, a die coating method, or a gravure coating method, so that an adhesive layer to be obtained has a predetermined thickness.

In some cases, instead of coating, the redispersed dispersion (C) can be disposed on a support by immersing the support in the redispersed dispersion (C).

After the redispersed dispersion (C) is applied to a support, the applied redispersed dispersion (C) may be dried as necessary. The drying condition varies depending on the type of the solvent, but examples thereof include a condition in which drying is performed at usually 50 to 150°C, preferably 60 to 100°C for usually 1 to 10 minutes, preferably 2 to 7 minutes.

As described above, it is preferable to provide a step of curing the redispersed dispersion (C) after drying the applied redispersed dispersion (C) as necessary. The curing condition Examples of the curing condition include a condition in which curing is performed usually for 3 days or more, preferably for 7 to 10 days under an environment of usually 5 to 60°C, preferably 15 to 40°C and usually 5 to 70% RH, preferably 5 to 50% RH. When curing is performed under such conditions, crosslinking proceeds sufficiently, and an adhesive layer having stable physical properties can be easily formed.

### [Other steps]

The present production method may include other steps as necessary in addition to the solid content increasing step and the redispersing step. Examples of the other steps include a preparation step of a polyester resin and a dispersing step of the polyester resin in an aqueous medium (preparation step of the dispersion (A)).

### Examples

Hereinafter, aspect examples of the present invention will be described more specifically based on Examples, but the present invention is not limited to these Examples.

Details of raw materials used in the following Examples and Comparative Examples will be described.

### <Polyester resin aqueous dispersion>

· Dispersion (A-1): VYLONAL MD-1335 (manufactured by TOYOBO Co., Ltd., solid content concentration: 30 mass%, aqueous medium: mixed solution of water and isopropanol (IPA) (IPA concentration with respect to 100 mass% of dispersion (A-1): 30 mass%))
· Dispersion (A-2): VYLONAL MD-1480 (manufactured by TOYOBO Co., Ltd., solid content concentration: 25 mass%, aqueous medium: water)
· Dispersion (A-3): Elitel KT-0507 (manufactured by UNITIKA LTD., solid content concentration: 25 mass%, aqueous medium: water)
· Dispersion (A-4): sulfonic acid group-containing polyester resin aqueous dispersion obtained in the following Synthesis Example 1 (solid content concentration: 55 mass%, aqueous medium: mixed solution of water and IPA)
· Dispersion (A-5):polyester resin aqueous dispersion obtained in the following Synthesis Example 2 (solid content concentration: 25 mass%, aqueous medium: water)

### <Organic solvent-soluble polyester resin>

· Resin (ca-1): VYLON 550 (manufactured by TOYOBO Co., Ltd.)

### <Acrylic resin aqueous dispersion>

· Dispersion (cA-2): SK Dyne E-03H (manufactured by Soken Chemical & Engineering Co., Ltd., solid content concentration: 62 mass%, aqueous medium: water)

### <Crosslinking agent>

· L-45: isocyanate-based crosslinking agent (manufactured by Soken Chemical & Engineering Co., Ltd.)
· M-12AT: aluminum chelate-based crosslinking agent (manufactured by Soken Chemical & Engineering Co., Ltd.)

### <Other components>

· Plasticizer: diethyl phthalate (DEP)
· Thickener: SN-Thickener 618 (manufactured by SAN NOPCO LIMITED)

The solid content concentration of the high-solid-content product obtained in the following Examples and Comparative Examples was evaluated according to the following.

### <Solid content concentration>

About 1 g of the high-solid-content product was weighed in a weighing bottle, dried at 200°C for 60 minutes, and then the mass of the residue was measured to measure the solid content concentration (mass%) of the high-solid-content product.

The film formability, water resistance, and adhesive force of the adhesive layer or the adhesive sheet obtained in the following Examples and Comparative Examples were evaluated according to the following.

### <Film formability>

The appearance of the adhesive layer obtained in the following Examples and Comparative Examples was visually observed, and the film formability thereof was evaluated according to the following criteria.
O: No crack, granules, or whitening was observed.
Δ: One or two of the following types were observed: cracks, granules, and whitening.
X: All of the following types were observed: cracks, granules, and whitening.

### <Water resistance>

The appearance of the adhesive layer obtained in the following Examples and Comparative Examples after immersion in water at normal temperature (25°C) for 24 hours was visually observed, and the water resistance thereof was evaluated according to the following criteria.
O: There was no change in appearance.
Δ: The surface of the adhesive layer was white cloudy.
X: The adhesive layer was dissolved or swollen in water.

### <Adhesive force>

A test piece of 150 mm × 20 mm was cut out from the adhesive sheet obtained in the following Examples and Comparative Examples, the exposed surface of the adhesive layer was bonded to a polycarbonate (PC) plate, and the adhesive layer was left to stand still in an environment of 23°C and 50% RH for 24 hours. Thereafter, using a tensile tester ("Autograph AG-X" manufactured by SHIMADZU CORPORATION), one end of the adhesive layer was pulled at a peeling rate of 300 mm/min in a 180° direction with respect to the bonding surface, and the adhesive force (peel strength, N/20 mm) required for peeling was measured.

### [Synthesis Example 1]

### · Production of polyester resin

Into a reaction pot equipped with a stirrer, a thermometer, and a reflux condenser, 30 parts by mass of isophthalic acid, 40.4 parts by mass of sebacic acid, 4.8 parts by mass of dimethyl sodium 5-sulfoisophthalic acid, 12.7 parts by mass of ethylene glycol, 16.8 parts by mass of diethylene glycol, 16.8 parts by mass of neopentyl glycol, and 0.1 parts by mass of n-tetrabutyl titanate as a catalyst were charged, and the transesterification reaction was performed at 170 to 230°C for 2 hours. After completion of the transesterification reaction, the temperature of the reaction system was raised from 230°C to 270°C, and the pressure in the system was slowly reduced to 5 Torr at 270°C over 60 minutes. Next, the polycondensation reaction was performed at 1 Torr or less for 3 hours. After completion of the polycondensation reaction, the system was returned from vacuum to normal pressure using nitrogen to obtain a sulfonic acid group-containing polyester resin in a molten state (hereinafter, also referred to as "resin (a-4)"). As a result of NMR analysis, the polycarboxylic acid component of the obtained resin (a-4) was 20 mol% of isophthalic acid, 22 mol% of sebacic acid, and 2 mol% of sodium 5-sulfoisophthalic acid, and the polyhydric alcohol component was 22 mol% of ethylene glycol, 17 mol% of diethylene glycol, 17 mol% of neopentyl glycol.

### · Production of polyester resin aqueous dispersion

Immediately after the completion of the polycondensation reaction, 150 parts by mass of the resin (a-4) in a molten state was charged into a dispersion pot containing 20 parts by mass of IPA, equipped with a stirrer, a thermometer, and a reflux condenser, and maintaining an internal temperature at 30°C to dissolve the resin, 102 parts by mass of water was then charged, and the mixture was stirred for aqueous dispersion while the temperature of the system was maintained at about 75°C, and then cooled to obtain a dispersion (A-4).

### [Synthesis Example 2]

A polyester resin (hereinafter, also referred to as "resin (a-5)") and an aqueous dispersion (A-5) of the resin (a-5) were obtained according to the methods described in [Comparative Example A-8] and [Comparative Example C-8] of JP 6163766 B2. As a result of NMR analysis, the polycarboxylic acid component of the obtained resin (a-5) was 49.2 mass% of sebacic acid and 27.2 mass% of trimetic acid, and the polyhydric alcohol component was 23.6 mass% of 1,4-butanediol.

### [Example 1]

A silicic anhydride fine powder (5 mass% with respect to the solid content of the dispersion (A-1)) was added to the dispersion (A-1), spray-dried in hot air at 120°C, and allowed to cool to obtain a high-solid-content product (B-1) having a solid content concentration of 100 mass%. 100 parts by mass of the obtained high-solid-content product (B-1) and 4 parts by mass of triethylamine were added to 300 parts by mass of deionized exchange water, the mixture was stirred at normal temperature (25°C) using a homogenizer, and left to stand still for 1 hour, and then the redispersibility of the redispersed dispersion at normal temperature (25°C) was evaluated. A case where the dispersion was completely redispersed was marked with O, a case where a precipitate was slightly confirmed was marked with Δ, and a case where all the solid content was precipitated was marked with X. The results are shown in Table 1.

To the redispersed dispersion after the redispersibility evaluation, 2 parts by mass of a crosslinking agent M-12AT and 25 parts by mass of a plasticizer DEP were added, and the mixture was stirred, thereby obtaining a redispersed dispersion (C-1a) for an adhesive.

The obtained redispersed dispersion (C-1a) was applied onto a polyethylene terephthalate (PET) film (EMBLET S-50, manufactured by UNITIKA LTD.) having a thickness of 50 µm using a doctor blade after defoaming, and dried at 100°C for 5 minutes to form an adhesive layer having a dry film thickness of 20 µm, thereby obtaining an adhesive sheet for an adhesive force test. In the obtained adhesive sheet, the film formability of the adhesive layer, water resistance, and the adhesive force of the adhesive sheet were evaluated according to the above method. The results are shown in Table 1.

### [Example 2]

A redispersed dispersion (C-1b) for an adhesive was obtained in the same manner as in Example 1 except that a crosslinking agent was not used in preparation of a redispersed dispersion for an adhesive. Using the obtained redispersed dispersion (C-1b), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1. Note that the redispersibility evaluation was performed under the same conditions as in Example 1, the same evaluation results were described in Table 1.

### [Example 3]

A high-solid-content product (B-2) having a solid content concentration of 100 mass% was obtained in the same manner as in Example 1 except that the dispersion (A-1) was changed to the dispersion (A-2) in Example 1. Into 100 parts by mass of the obtained high-solid-content product (B-2), 100 parts by mass of IPA was changed, the temperature was raised to 60°C to dissolve the resin, then 133 parts by mass of deionized exchange water and 4 parts by mass of triethylamine were added, the mixture was stirred at 60°C using a homogenizer, returned to normal temperature (25°C), and left to stand still for 1 hour, and then the redispersibility of the redispersed dispersion was evaluated. The evaluation criteria for redispersibility are as described in Example 1. The results are shown in Table 1.

The redispersed dispersion after the redispersibility evaluation was used as a redispersed dispersion (C-2) for an adhesive layer, and using the redispersed dispersion (C-2), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Example 4]

A high-solid-content product (B-3a) having a solid content concentration of 100 mass% was obtained in the same manner as in Example 1 except that the dispersion (A-1) was changed to the dispersion (A-3) in Example 1. In the obtained high-solid-content product (B-3a), the redispersibility of the redispersed dispersion was evaluated according to the method described in Example 1. The results are shown in Table 1.

A redispersed dispersion (C-3a) for an adhesive was obtained in the same manner as in Example 1 except that a crosslinking agent and a plasticizer were not used and 1 part by mass of a thickener SN-Thickener 618 was added in preparation of a redispersed dispersion for an adhesive. Using the obtained redispersed dispersion (C-3a), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Example 5]

A silicic anhydride fine powder (5 mass% with respect to the solid content of the dispersion (A-3)) was added to the dispersion (A-3), spray-dried in hot air at 120°C, and allowed to cool to obtain a high-solid-content product (B-3b) having a solid content concentration of 75 mass%. 133 parts by mass of the obtained high-solid-content product (B-3b) and 4 parts by mass of triethylamine were added to 267 parts by mass of deionized exchange water, the mixture was stirred, and the redispersibility of the redispersed dispersion was evaluated. The evaluation criteria for redispersibility are as described in Example 1. The results are shown in Table 1.

A redispersed dispersion (C-3b) for an adhesive was obtained in the same manner as in Example 1 except that a crosslinking agent and a plasticizer were not used and 1 part by mass of a thickener SN-Thickener 618 was added in preparation of a redispersed dispersion for an adhesive. Using the obtained redispersed dispersion (C-3b), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Example 6]

A high-solid-content product (B-4) having a solid content concentration of 100 mass% was obtained in the same manner as in Example 1 except that the dispersion (A-1) was changed to the dispersion (A-4) in Example 1. Into 150 parts by mass of the obtained high-solid-content product (B-4), 20 parts by mass of IPA was changed, the temperature was raised to 60°C to dissolve the resin, then 102 parts by mass of deionized exchange water was added, the mixture was stirred at 60°C using a homogenizer, returned to normal temperature (25°C), and left to stand still for 1 hour, and then the redispersibility of the redispersed dispersion was evaluated. The evaluation criteria for redispersibility of the redispersed dispersion are as described in Example 1. The results are shown in Table 1.

A redispersed dispersion (C-4) for an adhesive was obtained in the same manner as in Example 1 except that a plasticizer was not used and the crosslinking agent was changed to 4 parts by mass of L-45 in preparation of a redispersed dispersion for an adhesive. Using the obtained redispersed dispersion (C-4), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Example 7]

A high-solid-content product (B-5) having a solid content concentration of 100 mass% was obtained in the same manner as in Example 1 except that the dispersion (A-1) was changed to the dispersion (A-5) in Example 1. 100 parts by mass of the obtained high-solid-content product (B-5) and 6.8 parts by mass of triethylamine were added to 300 parts by mass of deionized exchange water, the mixture was stirred at 60°C using a homogenizer, and the redispersibility of the redispersed dispersion was evaluated. The evaluation criteria for redispersibility are as described in Example 1. The results are shown in Table 1.

The redispersed dispersion after the redispersibility evaluation was used as a redispersed dispersion (C-5) for an adhesive layer, and using the redispersed dispersion (C-5), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Comparative Example 1]

To 100 parts by mass of the resin (ca-1), 200 parts by mass of IPA was charged to dissolve the resin, 100 parts by mass of deionized exchange water and 4 parts by mass of triethylamine were then added, the mixture was stirred at 60°C using a homogenizer, and the dispersibility of the resin was evaluated. The evaluation criteria for dispersibility are as described in Example 1. The results are shown in the section of "Redispersibility" in Table 1.

The dispersion after the dispersibility evaluation was used as a dispersion (cc-1) for an adhesive, and an adhesive layer was produced using the dispersion (cc-1) according to the method described in Example 1, but the adhesive layer could not be produced.

### [Comparative Example 2]

A high-solid-content product (cB-2) having a solid content concentration of 100 mass% was obtained in the same manner as in Example 1 except that the dispersion (A-1) was changed to the dispersion (cA-2) in Example 1. 100 parts by mass of the obtained high-solid-content product (cB-2) was added to 61 parts by mass of deionized exchange water, the mixture was stirred, and the redispersibility of the redispersed dispersion was evaluated according to the method described in Example 1. The results are shown in Table 1.

A redispersed dispersion (cC-2) was obtained in the same manner as in Example 1 in preparation of a redispersed dispersion for an adhesive. Using the obtained redispersed dispersion (cC-2), an adhesive layer and an adhesive sheet for an adhesive force test were produced according to the method described in Example 1, and the film formability of the adhesive layer, water resistance, and the adhesive force of the adhesive sheet were evaluated. The results are shown in Table 1.

### [Table 1]

**Table 1**

| | | Solid content concentration (mass%) | Example 1 | Example 2 | Example 3 | Example 4 | Example 5 |
|---|---|---|---|---|---|---|---|
| Formulation (parts by mass) | High-solid-content product (B-1) | 100 | 100 | 100 | | | |
| | High-solid-content product (B-2) | 100 | | | 100 | | |
| | High-solid-content product (B-3a) | 100 | | | | 100 | |
| | High-solid-content product (B-3b) | 75 | | | | | 133 |
| | High-solid-content product (B-4) | 100 | | | | | |
| | High-solid-content product (B-5) | 100 | | | | | |
| | Resin (ca-1) | 100 | | | | | |
| | High-solid-content product (cB-2) | 100 | | | | | |
| | Aqueous medium | Deionized exchange water | 300 | 300 | 133 | 300 | 267 |
| | | IPA | | | 100 | | |
| | Basic compound | Triethylamine | 4 | 4 | 4 | 4 | 4 |
| | Plasticizer | DEP | 25 | 25 | | | |
| | Crosslinking agent | M-12AT | 2 | | | | |
| | | L-45 | | | | | |
| | Thickener | SN-Thickener 618 | | | | 1 | 1 |
| Evaluation | Adhesive layer | Redispersed dispersion No. | C-1a | C-1b | C-2 | C-3a | C-3b |
| | | Film formability | ○ | ○ | ○ | ○ | Δ |
| | | Water resistance | ○ | Δ | ○ | ○ | ○ |
| | | Adhesive force (N/20 mm) | 14.0 | 16.0 | 17.8 | 20.6 | 15.4 |
| | Redispersed dispersion | Redispersibility | ○ | ○ | ○ | ○ | Δ |

**Table 1 (continued)**

| | | Solid content concentration (mass%) | Example 6 | Example 7 | Comparative Example 1 | Comparative Example 2 |
|---|---|---|---|---|---|---|
| Formulation (parts by mass) | High-solid-content product (B-1) | 100 | | | | |
| | High-solid-content product (B-2) | 100 | | | | |
| | High-solid-content product (B-3a) | 100 | | | | |
| | High-solid-content product (B-3b) | 75 | | | | |
| | High-solid-content product (B-4) | 100 | 150 | | | |
| | High-solid-content product (B-5) | 100 | | 100 | | |
| | Resin (ca-1) | 100 | | | 100 | |
| | High-solid-content product (cB-2) | 100 | | | | 100 |
| | Aqueous medium | Deionized exchange water | 102 | 300 | 100 | 61 |
| | | IPA | 20 | | 200 | |
| | Basic compound | Triethylamine | | 6.8 | 4 | |
| | Plasticizer | DEP | | | | 25 |
| | Crosslinking | M-12AT | | | | 2 |
| | agent | L-45 | 4 | | | |
| | Thickener | SN-Thickener 618 | | | | |
| Evaluation | Adhesive layer | Redispersed dispersion No. | C-4 | C-5 | cc-1*¹ | cC-2 |
| | | Film formability | ○ | ○ | Unmeasurable | X |
| | | Water resistance | Δ | ○ | Unmeasurable | Δ |
| | | Adhesive force (N/20 mm) | 11.2 | 12.5 | Unmeasurable | 3.2 |
| | Redispersed dispersion | Redispersibility | ○ | Δ | X*² | ○ |

| | | | | | | |
|---|---|---|---|---|---|---|
| *1: Dispersion (cc-1) *2: Dispersibility of resin (ca-1) | | | | | | |

## Claims

1. A method for producing a redispersed aqueous polyester resin dispersion for an adhesive, comprising:
a solid content increasing step of setting a solid content concentration of a polyester resin aqueous dispersion for an adhesive containing a polyester resin and water to 70 mass% or more; and
a step of redispersing a high-solid-content product obtained by the solid content increasing step in an aqueous medium.

2. The method for producing a redispersed aqueous polyester resin dispersion for an adhesive according to claim 1, wherein the polyester resin is a self-emulsifiable resin.

3. The method for producing a redispersed aqueous polyester resin dispersion for an adhesive according to claim 1, wherein the dispersion comprises at least one dispersion selected from the group consisting of a dispersion in which a polyester resin having a sulfonic acid group is dispersed in an aqueous medium and a dispersion in which a polyester resin having a carboxyl group is dispersed in an aqueous medium by neutralizing the polyester resin with a basic compound.

4. The method for producing a redispersed aqueous polyester resin dispersion for an adhesive according to claim 1, wherein the solid content concentration of the high-solid-content product is set to 80 mass% or more by the solid content increasing step.

5. The method for producing a redispersed aqueous polyester resin dispersion for an adhesive according to any one of claims 1 to 4, wherein the redispersed dispersion comprises a crosslinking agent.
